Europäisches Patentamt

European Patent Office

Office européen des brevets

(11) Numéro de publication: **0 233 515**
**B1**

(12) **FASCICULE DE BREVET EUROPEEN**

⑲.

(45) Date de publication du fascicule du brevet:
**15.03.89**

(21) Numéro de dépôt: **87101116.9**

(22) Date de dépôt: **27.01.87**

(51) Int. Cl.⁴: **A47J 43/044**

(54) Appareil de préparation de mayonnaise ou sauce analogue.

(30) Priorité: **30.01.86 FR 8601288**

(43) Date de publication de la demande:
**26.08.87 Bulletin 87/35**

(45) Mention de la délivrance du brevet:
**15.03.89 Bulletin 89/11**

(84) Etats contractants désignés:
**AT BE CH DE ES IT LI NL SE**

(56) Documents cités:
**EP-A- 0 071 247**
**EP-A- 0 071 496**
**US-A- 1 521 038**
**US-A- 2 651 343**

(73) Titulaire: **MOULINEX, 7 à 15, rue Jules-Ferry,**
**F-93171 Bagnolet Cédex(FR)**

(72) Inventeur: **Weiss, Roger, Sté Moulinex 11, rue**
**Jules-Ferry, F-93170 Bagnolet(FR)**

(74) Mandataire: **May, Hans Ulrich, Dr., Thierschstrasse 27,**
**D-8000 München 22(DE)**

## Description

L'invention se rapporte à un appareil de préparation de mayonnaise ou sauce analogue.

Elle concerne, plus particulièrement, un appareil du type comprenant un bol de travail dans lequel tourne un outil de brassage solidaire d'un arbre entraîné en rotation autour d'un axe vertical par un groupe moteur, et un réservoir d'huile supporté au-dessus dudit bol et communiquant avec ce bol par l'intermédiaire d'un dispositif de distribution d'huile.

Dans les appareils connus de ce genre, par exemple dans l'appareil décrit dans le brevet français FR-A 1 092 758, le dispositif de distribution d'huile est constitué par un robinet réglable. Il arrive alors que l'utilisateur ouvre ce robinet avant de mettre en marche le moteur, ce qui peut se traduire par un afflux d'huile trop important dans le jaune d'œuf contenu dans le bol de travail, et donc par un échec dans la préparation de la mayonnaise.

L'invention a pour but de supprimer pratiquement cet inconvénient.

Dans un appareil selon l'invention, le dispositif de distribution d'huile est constitué par une pompe volumétrique qui est entraînée par l'arbre rotatif et dont l'orifice d'admission communique avec le réservoir tandis que son orifice de refoulement communique avec le bol de travail, l'huile ne s'écoulant ainsi dans ce bol que lorsque l'arbre est mis en rotation.

On évite ainsi tout risque d'écoulement d'huile dans le jaune d'œuf avant la mise en rotation de l'outil de brassage.

Les caractéristiques et avantages de l'invention ressortiront d'ailleurs de la description qui va suivre, à titre d'exemple, en référence aux dessins annexés dans lesquels:

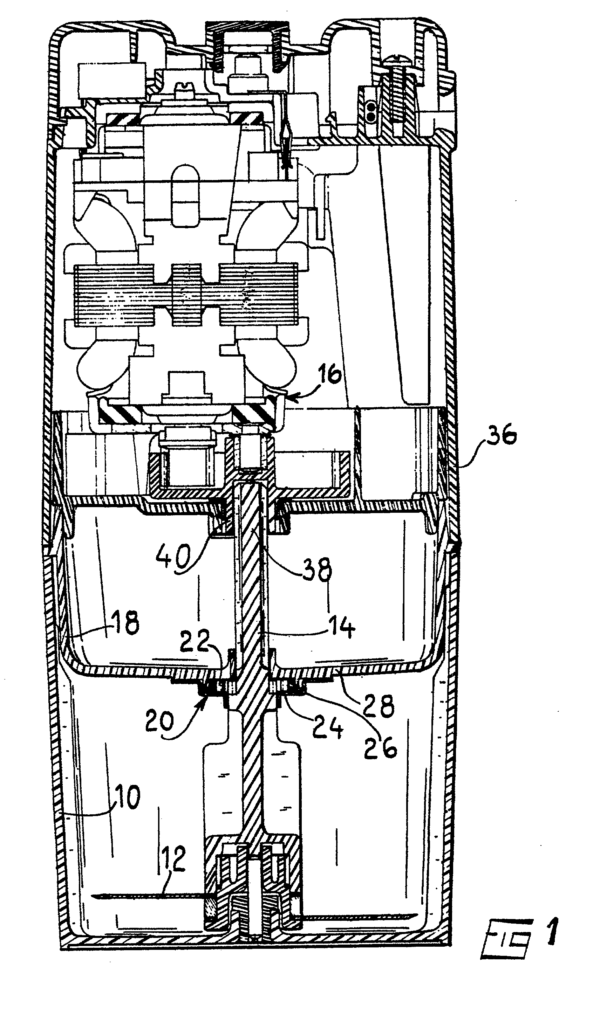

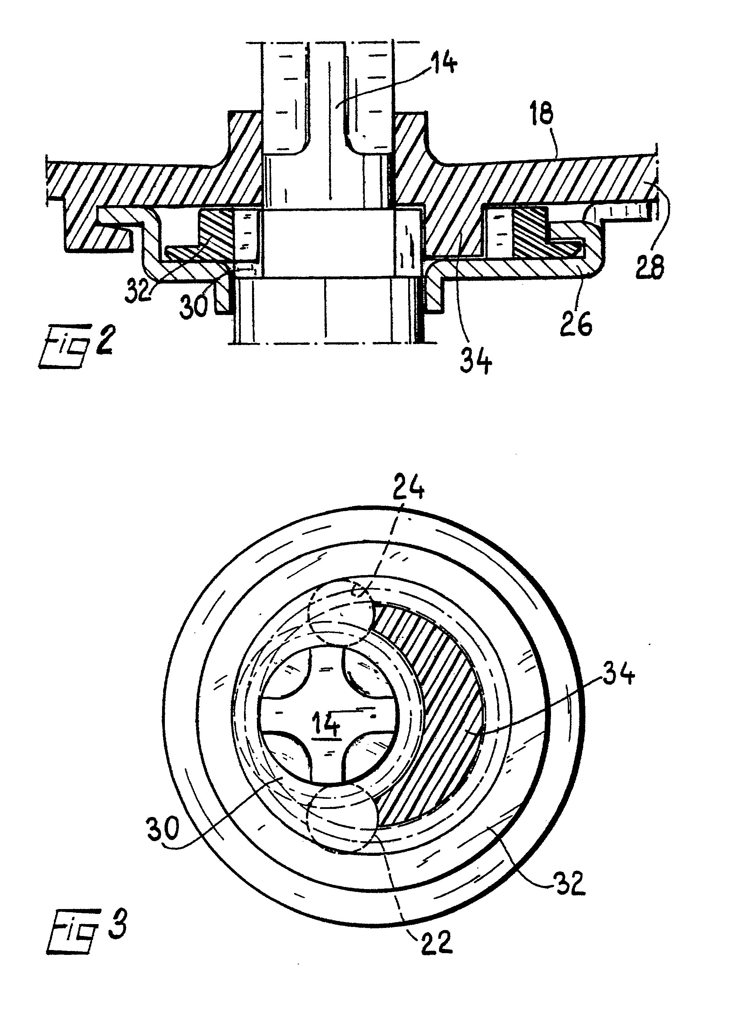

la figure 1 est une vue en coupe verticale d'un appareil selon l'invention; la figure 2 représente la pompe à plus grande échelle et en coupe; la figure 3 est une vue en plan des organes essentiels de la pompe.

L'appareil de préparation de mayonnaise représenté à la figure 1 comprend un bol de travail 10 dans lequel tourne un outil de brassage 12 solidaire d'un arbre 14 entraîné en rotation autour d'un axe vertical par un groupe moteur 16, et un réservoir d'huile 18 supporté au-dessus du bol 10 et communiquant avec ce bol par l'intermédiaire d'un dispositif de distribution d'huile 20.

Ce dispositif de distribution d'huile est constitué par une pompe volumétrique qui est entraînée par l'arbre rotatif 14 et dont l'orifice d'admission 22 communique avec le réservoir 18 tandis que son orifice de refoulement 24 communique avec le bol de travail 10.

Cette pompe volumétrique est une pompe du type à engrenage. Elle est contenue dans un carter 26 fixé sous la paroi de fond 28 du réservoir 18. Elle comprend une première roue dentée 30 solidaire de l'arbre 14, et une seconde roue dentée 32 engrenant avec la première et montée folle dans le carter 26 (fig. 2). Les orifices d'admission 22 et de refoulement 24 sont pratiqués respectivement dans la paroi de fond 28 et dans le carter 26.

La seconde roue dentée 32 est constituée par une couronne excentrée, dentée intérieurement, qui engrène avec la première roue 30 et qui est de plus grand diamètre que celle-ci. L'espace entre les deux roues 30 et 32 est comblé par un secteur 34 en forme de croissant. Les orifices 22 et 24 sont ménagés au voisinage des extrémités du secteur 34.

Pour confectionner de la mayonnaise au moyen de cet appareil, on sépare d'abord le bol du reste de l'appareil; on y introduit le jaune d'œuf, le sel et la moutarde; on met alors en place l'arbre 14 équipé de l'outil 12, et le réservoir 18; on emplit ce réservoir d'huile; puis on place sur ce réservoir le boîtier 36 du groupe moteur 16, l'extrémité supérieure 38 de l'arbre 14 venant ainsi s'accoupler avec l'entraîneur de sortie 40 de ce groupe moteur.

On met alors le moteur en marche. La pompe 20 entre en fonctionnement. L'huile, entraînée par les dents des engrenages passe alors de l'orifice 22 à l'orifice 24 pour s'écouler de manière régulière dans le bol 10.

## Revendications

1. Appareil de préparation de mayonnaise ou sauce analogue, comprenant un bol de travail (10) dans lequel tourne un outil de brassage (12) solidaire d'un arbre (14) entraîné en rotation autour d'un axe vertical par un groupe moteur (16), et un réservoir d'huile (18) supporté au-dessus dudit bol (10) et communiquant avec ce bol par l'intermédiaire d'un dispositif de distribution d'huile (20), caractérisé en ce que le dispositif de distribution (20) est constitué par une pompe volumétrique qui est entrainée par ledit arbre rotatif (14) et dont l'orifice d'admission (22) communique avec le réservoir (18) tandis que son orifice de refoulement (24) comunique avec le bol de travail (10), l'huile ne s'écoulant ainsi dans ledit bol (10) que lorsque l'arbre (14) est mis en rotation.

2. Appareil selon la revendication 1, caractérisé en ce que la pompe est une pompe du type à engrenage contenue dans un carter (26), fixé sous la paroi de fond (28) du réservoir (18), cette pompe comprenant une première roue dentée (30) solidaire de l'arbre rotatif (14) et une seconde roue dentée (32) engrenant avec la première et montée folle dans ledit carter (26), les orifices d'admission (22) et de refoulement (24) étant pratiqués respectivement dans ladite paroi de fond (28) et dans ledit carter (26).

3. Appareil selon la revendication 2, caractérisé en ce que la seconde roue dentée (32) est constituée par une couronne excentrée, dentée intérieurement, qui engrène avec la première roue (30) et qui est de plus grand diamètre que celle-ci, l'espace entre les deux roues (30 et 32) étant comblé par un secteur (34) en forme de croissant, lesdits orifices (22 et 24) étant ménagés au voisinage des extrémités dudit secteur (34).

## Patentansprüche

1. Gerät zur Herstellung von Mayonnaise oder einer entsprechenden Sauce mit einer Arbeitsschüssel (10), in der sich ein Rührwerkzeug (12) dreht, das starr mit einer Welle (14) verbunden ist, die durch einen Motor (16) um eine vertikale Achse angetrieben ist, und mit einem oberhalb der Arbeitsschüssel (10) gehaltenen Ölbehälter (18), der mit der Arbeitsschüssel durch eine Ölabgabevorrichtung (20) in Verbindung steht, dadurch gekennzeichnet, daß die Ölabgabevorrichtung (20) aus einer Verdrängerpumpe besteht, die von der drehbaren Welle (14) angetrieben ist und deren Einlaßöffnung (22) mit dem Behälter (18) und deren Abgabeöffnung (24) mit der Arbeitsschüssel (10) in Verbindung steht, so daß das Öl in die Arbeitsschüssel (10) nur fließt, wenn die Welle (14) drehend angetrieben wird.

2. Gerät nach Anspruch 1, dadurch gekennzeichnet, daß die Pumpe eine Zahnradpumpe ist, die in einem unter der Bodenwand (28) des Behälters (18) befestigten Gehäuse (26) enthalten ist, wobei diese Pumpe ein mit der drehbaren Welle (14) starr verbundenes erstes Zahnrad (30) und ein in diesem Gehäuse (26) frei drehbar montiertes, mit dem ersten Zahnrad kämmendes zweites Zahnrad (22) aufweist und die Einlaßöffnung (22) und Abgabeöffnung (24) jeweils in der Bodenwand (28) und im Gehäuse (26) ausgebildet sind.

3. Gerät nach Anspruch 2, dadurch gekennzeichnet, daß das zweite Zahnrad (32) aus einem exzentrischen Innenzahnkranz besteht, der mit dem ersten Zahnrad (30) kämmt und einen größeren Durchmesser als dieses hat, wobei der Raum zwischen den beiden Zahnrädern (30 und 32) von einem sichelförmigen Sektor (34) ausgefüllt ist und die Öffnungen (22 und 24) in der Nähe der Enden dieses Sektors (34) ausgebildet sind.

**Claims**

1. An apparatus for the preparation of mayonnaise or a similar sauce comprising a work bowl (10) in which a stirrer (12), fixed to a shaft (14) driven in rotation about a vertical axis by a motor unit (16), rotates and an oil reservoir (18) supported above the said bowl (10) and communicating with the bowl through an oil distributing device (20), characterized in that the oil distributing device (20) is constituted by a volumetric pump which is driven by the said rotating shaft (14) and the inlet orifice (22) of which communicates with the reservoir (18) whilst its delivery orifice (24) communicates with the work bowl (10), the oil therefore only flowing into the said bowl (10) when the shaft (14) is made to rotate.

2. An apparatus according to claim 1, characterized in that the pump is of the meshing kind contained in a housing (26) fixed under the bottom wall (28) of the reservoir (18), this pump comprising a first toothed wheel (30) fixed to the rotating shaft (14) and a second toothed wheel (32) meshing with the first and mounted free in the said housing (26), the inlet (22) and delivery (24) orifices being made respectively in the said bottom wall (28) and in the said housing (26).

3. An apparatus according to claim 2, characterized in that the second toothed wheel (32) is constituted by an eccentric ring, toothed on the inside, which meshes with the first wheel (30) and which has a greater diameter than the latter, the space between the two wheels (30 and 32) being filled by a crescent shaped sector (34), the said orifices (22 and 24) being made near the ends of the said sector (34).

FIG 1

EP 0 233 515 B1

Fig 2

14

18

28

32

30

34

26

Fig 3

24

14

30

34

22

32